# EUROPÄISCHE PATENTSCHRIFT

(11) **EP 3 587 010 B1**
(45) Veröffentlichungstag und Bekanntmachung des Hinweises auf die Patenterteilung: **13.08.2025**
(21) Anmeldenummer: 18179725.9
(22) Anmeldetag: 26.06.2018
(51) Int. Cl.: B23B 31/20, B23B 31/26, B23Q 17/00

(54) **SPANNEINRICHTUNG**
CLAMPING DEVICE
DISPOSITIF DE SERRAGE

(43) Veröffentlichungstag der Anmeldung: 01.01.2020
(73) Patentinhaber: MTH GbR Markus und Thomas Hiestand, 88630 Pfullendorf (DE)
(72) Erfinder: Hiestand, Karl, 88630 Pfullendorf (DE)
(74) Vertreter: Riebling, Peter

(56) Entgegenhaltungen:
- EP-A1- 2 138 253
- DE-A1- 3 822 565
- JP-A- 2002 046 005
- JP-A- S6 016 307
- US-A- 3 625 530
- US-A- 3 643 969

## Beschreibung

Gegenstand der Erfindung ist eine Spanneinrichtung mit einem federgespannten Spannzylinder zur Betätigung von Spannzeugen an Drehmaschinen nach dem Oberbegriff des Patentanspruches 1.

Spanneinrichtungen für Werkzeugmaschinen, insbesondere für Drehmaschinen sind beispielsweise mit einem Kraftspannfutter zur Halterung eines Werkstücks versehen, dessen Spannbacken mittels der Spanneinrichtung über eine axial verstellbare Zugstange als Betätigungsglied verstellbar sind.

Eine derartige Spanneinrichtungen ist beispielsweise mit der US 3 643 969 A offenbart und weist einen Kraftspeicher zur Aufrechterhaltung der Spannkraft auf, der aus einem vorgespannten Federpaket gebildet ist.

Dabei ist ein axial verstellbares Zugrohr durch ein Betätigungsmodul betätigbar, wobei die Spanneinrichtung zur Umsetzung der Verstellbewegungen in die zur Betätigung der Spannbacken erforderlichen axialen Verstellbewegungen des Zugrohrs den Kraftspeicher in einer Maschinen-Spindel zur Aufrechterhaltung der Spannkraft verbaut hat.

Eine ähnliche Spanneinrichtung ist aus der JP 2002 046005 A bekannt und umfasst ein Kraftspannfutter mit Spannbacken zur Halterung eines kleinen dünnwandigen Werkstücks, ein axial verstellbares, rohrförmiges Verstellglied, ein Betätigungsmodul zur Betätigung der Spannbacken über das Verstellglied und eine Maschinen-Spindel mit einem glockenförmigen Spannzylinder, wobei die Spanneinrichtung zur Umsetzung der zur Betätigung der Spannbacken erforderlichen axialen Verstellbewegungen des Verstellglieds eine einzige Schraubendruckfeder innerhalb des Spannzylinders zur Aufrechterhaltung der Spannkraft aufweist.

In einem umlaufenden Betriebszustand ist der Spannzylinder dazu ausgebildet mit der Maschinen-Spindel umzulaufen, das Betätigungsmodul ist dazu ausgebildet stillzustehen und das Betätigungsmodul ist berührungsfrei vom Spannzylinder trennbar.

Dabei ist das Verstellglied durch eine Zugstange gebildet, welche mit ihrem dem Kraftspannfutter abgewandten Ende über eine Gewindeverbindung mit einem hohlen, rohrförmigen Kolbenrohr verbunden ist. Bei manueller Verdrehung des Kolbenrohrs relativ zu der Zugstange mit einem Flansch des Kolbenrohrs kann die Kompressionskraft der Feder axial verstellt werden. Nachteilig an dieser Vorrichtung ist, dass lediglich ein Federpaket als Kraftspeicher das Zugrohr umschließt und direkt auf dieses wirkt. Somit lässt sich die Federkraft nur schwer dosieren und es können nur geringe Spannkräfte auf ein eingespanntes Werkstück wirken.

Nach dem Stand der Technik sind Hydraulik- oder Pneumatikzylinder für die Betätigung einer Spannzange oder eines Spannfutters auf einer Werkzeugmaschine bekannt. Dabei ist das Zylinderteil und der umlaufende Drehzuführungsteil als ganze Einheit fest miteinander verschraubt und umlaufend mit der Maschinenspindel, wobei der notwendige Öl oder Luftdruck dauernd ansteht.

Nach der Anmeldung DE 440 45 47 C2 und DE 197 52 084 ist der Hydraulikkolben über ein Kolbenrohr, mit der das Spannfutter betätigbaren Zugstange fest verbunden, und mit der Maschinenspindel im Betriebszustand als Ganzes umlaufend, wobei das stehende Zuführgehäuse für Öl oder Luft über Lager auf dem umlaufenden Drehverteiler zentriert ist.

Die Nachteile des Standes der Technik sind, dass die Zuführung des Druckmittels von einem stehenden Drehverteilergehäuse in eine umlaufende Drehverteilerwelle eine hohe Leckage verursacht und bei hoher Drehzahl zusätzlich ein hoher Energieverbrauch und eine hohe Wärmeentstehung durch die viskose Reibung auftreten. Die Masse des umlaufenden Drehzuführungsteils ist mit dem gesamten Zylinder und der Kolbenmasse fest verbunden und läuft als Ganzes um.

Das stehende Zuführgehäuse für Öl oder Luft muss über Kugellager zentriert werden, die einem Verschleiß und einer Rollreibung unterliegen.

Die Druckversorgung mit Öl oder Luft muss während des ganzen Betriebs aufrechterhalten werden, wodurch das Hydraulikaggregat zum Ausgleich der Drehzuführungsleckage dauernd mit hohem Energieverbrauch laufen muss. Bei einem Druckabfall müssen zur Sicherheit, beim Ausbleiben des HydraulikDrucks im Zylindergehäuse, mindestens zwei zusätzliche Sicherheitsventile gewährleisten, dass der der Kolbenraumdruck des Druckmediums aufrechterhalten bleibt.

Zudem ist ein elastisches Nachspannen bei ausbleibendem Hydraulikdruck nicht möglich.

EP 2 384 839 A1 zeigt einen umlaufenden Elektro-Spannzylinder, dessen Federn zur Erhaltung der Spannkraft im Betriebszustand durch Verdrehen der Mutter eines Planetengetriebes veränderbar sind, wobei die jeweilige Federkraft über Planetenrollen auf das Gewinde des Zugrohres übertragbar ist.
1. Um eine Veränderung der Federkraft durch eine der Planetenrollspindel im Betriebszustand zu verhindern, ist die Mutter der Planetenrollspindel drehfest über Getriebeteile mit einer Schiebemuffe verbunden, die im Betriebszustand über Planverzahnung drehfest mit dem Zylinderkörper gekoppelt ist.
2. Die Betätigungseinrichtung besteht aus einem auf einem wellenartigen Ansatz des Zylinderkörpers gelagerten und axial fixierten Antriebsrad, das über Riemen oder Zahnräder mit dem Servomotor drehfest verbunden ist. Das Antriebsrad mit Axialverzahnung ist im Betriebszustand von der Schiebemuffe abgekoppelt. Sollen die Federkräfte verändert werden, wird über einen Zylinder die Schiebemuffe mit dem Antriebsrad gekoppelt, wobei über dessen Verdrehung über Getriebeglieder auf die Planetenrollspindel die Federkräfte des Kraftspeichers veränderbar sind und eine definierte Nachspannung ermöglichen.

Der aus mehreren Federpaketen bestehende Kraftspeicher wird, sobald die Zugstange nicht mehr bewegt wird, aktiviert. Dadurch sollen während der Bearbeitung eines Werkstücks alle an der Kraftübertragung beteiligten Bauteile der Spanneinrichtung mit der Maschinenspindel trieblich fest verbunden sein, so dass Rückstellbewegungen des Kraftspannfutters auszuschließen sind.

Die Schiebemuffe ist mittels einer Servoeinrichtung in Form eines in einem Zylinder eingesetzten und durch ein Druckmittel verstellbaren Verstellkolbens axial verstellbar.

Die Drehzahl der umlaufenden Servoeinrichtung der Spanneinrichtung muss jedoch in Abhängigkeit des Antriebsmotors der Werkzeugmaschine gesteuert werden.

Aufgabe der Erfindung ist es daher, eine Spanneinrichtung der vorgenannten Gattung in der Weise auszubilden, dass die Leckage-behaftete und mit hohem Energieverbrauch verbundene Zuführung von Druckmittel während des umlaufenden Betriebszustandes entfällt.

Damit soll auch die auftretende Wärme, die durch die viskose Reibung des Druckmediums zwischen dem stehenden Zuführgehäuse und der umlaufenden Zuführwelle entsteht, vollkommen entfallen. Auch die zentrierenden verschleißbedingten Kugellager sollen entfallen.

Der über das Zugrohr mit dem Spannfutter verbundene Teil soll ohne Mediumdruck eine definierte Spannkraft elastisch halten und ggf. elastisch nachspannen.

Die erforderliche umlaufende Masse des Zylinders soll im Gewicht minimiert werden.

Das erforderliche Antriebs- und Bremsmoment, das GD², soll beim Hochfahren und Stoppen der Maschine minimiert werden.

Die der Erfindung zugrunde liegenden Aufgaben werden durch die Merkmale des unabhängigen Patentanspruches 1 gelöst, während vorteilhafte Ausgestaltungen und Weiterbildungen der Erfindung den Unteransprüchen entnommen werden können.

Merkmal der Erfindung ist, dass während des umlaufenden Betriebszustandes der Spannzylinder vom Betätigungsmodul trennbar ist.

Nach einem weiteren Merkmal wird die Spannkraft des Zylinders durch eine eingebaute Feder aufrechterhalten und gesichert.

Das Betätigungsmodul ist dazu eingerichtet im umlaufenden Betriebszustand der Spanneinrichtung stillzustehen, wobei kein Kontakt mit dem Zylinder besteht.

Zur Verstellung der Federkräfte im Zylinder wird die Kolbenversion des Betätigungsmoduls kurzzeitig mit Druck beaufschlagt, wobei deren Kraft über ein bzw. mehrere Wälzlager, oder über Druckrollen oder Drucklager auf den Zylinder und die Federn übertragbar sind. Zur Veränderung der Federspannung kann das stillstehende Betätigungsmodul kurzzeitig an den Spannzylinderteil angedockt werden.

Das Betätigungsmodul weist dazu bevorzugt ein oder zwei Kolbenflächen eines Kolbens auf, deren Größe bei Druckbeaufschlagung der maximalen Feder- und Spannkraft entspricht.

Das Betätigungsmodul kann als Ein- oder Mehrkolbensystem ausgeführt sein, wobei im Koppelzustand die mindestens eine Kolbenfläche des Betätigungsmoduls mit Luft- oder Öldruck beaufschlagt ist und bedingt durch den Druck das bzw. die Wälzlager, die Druckrollen oder die Drucklager bewegt.

Ein Mehrkolbensystem mit seiner verdoppelten Kolbenfläche erlaubt auch eine Betätigung mit niederem Luftdruck als Medium.

Die vorliegende Erfindung ist jedoch nicht auf die Verwendung von zwei Kolbenflächen beschränkt, auch eine, drei oder mehr Kolbenflächen können zur Anwendung kommen.

Lediglich zur Verstellung der Spannkräfte im Spannzylinder wird der Kolben des Betätigungsmoduls kurzzeitig mit einem Druckmittel beaufschlagt, wobei die Kraft des Kolbens über ein oder mehrere Wälzlager oder über Druckrollen oder Drucklager auf den Kraftspeicher und somit auf den Spannzylinder übertragbar sind.

Nach dem Verstellen der Spannkraft im Stillstand oder beim Lauf der Maschine wird das Betätigungsmodul wieder drucklos geschaltet, wobei kein Druckmittel mehr Druck auf die Kolbenflächen ausübt. Besteht nun kein Druck mehr, löst sich auch der Kontakt zwischen dem Wälzlager bzw. den Wälzlagern, den Rollelementen oder Drucklagern und den mit dem Zylinder verbundenen Teilen, sodass sich das Betätigungsmodul vom Zylinder abkoppeln lässt.

In diesem Zustand wirkt nur die Feder bzw. die Federn des Kraftspeichers des Spannzylinders über Zugelemente auf das Kraftspannfutter oder die Spannzange.

Durch die Verwendung des Kraftspeichers ist der Spannungszustand eines Werkstückes elastisch sicherbar.

Ein derartiger Kraftspeicher kann beispielsweise aus einer Vielzahl von gleichmäßig über den Umfang verteilt angeordneten Schraubendruckfedern bestehen, die in einem als Druckstück ausgebildeten ersten Gehäuse eingesetzt sind.

Derartige Schraubendruckfedern können eine rechteckige, vorzugsweise quadratische, eine elliptische oder eine kreisförmige Querschnittsfläche aufweisen.

Im Folgenden wird immer nur eine Feder als Kraftspeicher beschrieben, wobei die vorliegende Spanneinrichtung nicht auf die Verwendung einer Feder beschränkt ist. Auch eine Mehrzahl von Federpaketen oder elastomere Federkörper können als Kraftspeicher in der Spanneinrichtung zur Anwendung kommen.

Neben der Einwirkung des Betätigungsmoduls auf die Feder ist eine Feinverstellung der wirksamen Federkräfte möglich, wobei diese manuell über ein Verstellrad getätigt werden kann.

Die mit dem Zylinder verbundenen Teile welche mit dem bzw. den Wälzlagern, den Druckrollen, oder Drucklagern des Betätigungsmoduls angesteuert werden, bestehen u.a. aus dem Zugrohr, welches mit seinem dem Kraftspannfutter abgewandten Ende mindestens teilweise in ein Verschiebeteil fest eingeschraubt ist

Das Verschiebeteil, mit dem eingeschraubten Zugrohr, ist über sein Außengewinde mit dem Innengewinde einer axial fixierten Hohlwelle verbunden, bei deren manueller Verdrehung mit einem Verstellrad die Kraft der Feder bzw. der Federn axial feinfühlig verstellbar ist.

Gemäß einer Ausführungsform ist der Bergeöffnete Zustand der Spannzange durch einen Bero-Sensor bestimmbar, wobei in einer weiteren Ausführungsform auch der Federweg durch einen Wegmesssensor überwachbar bzw. messbar ist. Durch den Wegmesssensor ist die exakte Lage der Zugstange und damit der Spannbacken ermittelbar. So kann der Druckring mit einem Signalgeber ausgestattet sein, der mit dem Wegmesssensor zur Ermittlung der jeweiligen Lage des Kolbenrohrs zusammenwirkt. Mittels dieses Signalgebers sind somit Messgrößen abgreifbar, die eine sichere Steuerung der Werkzeugmaschine ermöglichen.

Ein weiterer Vorteil kann sein, dass bei einem schlagartigen Druckabfall durch Schlauchbruch am Betätigungsmodul, die Spannzange oder das Kraftspannfutter ganz geschlossen wird.

Im Folgenden wird die Erfindung anhand von mehrere Ausführungsformen darstellenden Zeichnungen näher erläutert. Hierbei gehen aus den Zeichnungen und ihren Beschreibungen weitere Merkmale und Vorteile der Erfindung hervor, wobei die Erfindung allein durch die Fassung des nachfolgenden, unabhängigen Patentanspruches bestimmt ist.

Es zeigen:
Figur 1: Schnittdarstellung Spanneinrichtung mit druckbeaufschlagtem Betätigungsmodul
Figur 2: Schnittdarstellung Spanneinrichtung druckloses Betätigungsmodul
Figur 3: Schnittdarstellung Spanneinrichtung 2. Variante druckloses Betätigungsmodul (nicht Teil der Erfindung)
Figur 4: Schnittdarstellung Spanneinrichtung mit Feineinstellung (nicht Teil der Erfindung)
Figur 5: Schnittdarstellung Spanneinrichtung mit Feineinstellung 2.Variante (nicht Teil der Erfindung)
Figur 6: Draufsicht Werkzeug (nicht Teil der Erfindung)
Figur 7: Schnittdarstellung Verstellradbuchse
Figur 8. Schnittdarstellung Betätigungsmodul mit einer Druckkammer
Figur 9: Schnittdarstellung Spanneinrichtung mit Kugelrollspindel
Figur 10: Schnittdarstellung Spanneinrichtung mit Exzenterantrieb

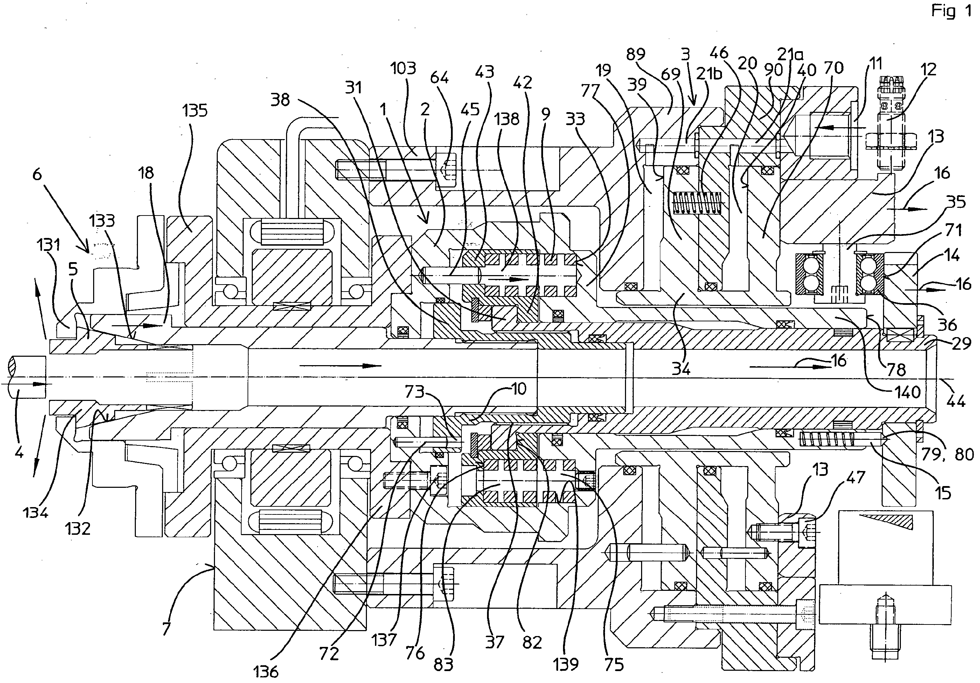

Die in den Figuren 1 bis 10 dargestellte und mit 1 bezeichnete Spanneinrichtung dient zur Betätigung eines auf einer Werkzeugmaschine angeordneten Kraftspannfutters 6, mittels dessen radial verstellbarer Spannbacken 134 einer Spannzange 5 ein zu bearbeitendes Werkstück 4 in dem Kraftspannfutter 6 eingespannt werden kann. Das Kraftspannfutter 6 ist in einer Glocke 131 an der Stirnseite der Spanneinrichtung 1 aufgenommen.

Die Spannzange 5 stützt sich in axialer Richtung am Innenumfang der Glocke 131 ab und weist an ihrem, dem Werkstück 4 abgewandten Außenumfang der Spannbacken 134 einen konischen Bereich 132 auf, der in der Schnittdarstellung nach Figur 1 als Schrägfläche dargestellt ist.

Die Spannbacken 134 sind mindestens teilweise mit ihrem konischen Bereich 132 im Inneren des hohlen Zugrohrs 18 aufgenommen, welches an seinem dem Werkstück 4 zugewandten Ende ebenfalls einen konischen Bereich 133 am Innenumfang aufweist, der mit dem konischen Bereich 132 am Außenumfang der Spannzange 5 zusammenwirkt. Auch dieser konische Bereich ist in der Schnittdarstellung nach Figur 1 als Schrägfläche dargestellt.

Bedingt durch die in gleicher Richtung (entgegen der Pfeilrichtung 16) ansteigenden konischen Bereiche 132, 133 wird bei einer axialen Zustellbewegung des Zugrohrs 18, das Kraftspannfutter 6 in radialer Richtung einwärts bewegt. Die Glocke 131 ist drehfest mit der Maschinenspindel 135 verbunden, wobei mit Hilfe von Schrauben 137 der Federspannzylinder 2 mit dem Flansch 136 der Maschinenspindel 135 verbunden ist.

Auf die Maschinenspindel 135 wirkt ein Spindelmotor 7 ein, der als Elektromotor ausgebildet ist, durch den die Werkzeugmaschine antreibbar ist.

Auf der der Maschinenspindel 135 abgewandten Seite ist an dem Federspannzylinder 2 ein Druckstück 77 befestigt. Das Druckstück 77 weist eine daran angeformte Hohlwelle 140 auf, die sich in axialer Richtung erstreckt und das Kolbenrohr 29 umschließt.

Im Inneren des glockenförmigen Federspannzylinders 2 befindet sich der Kraftspeicher 138, der eine Vielzahl von Schraubendruckfedern 9 aufweist.

Im Federspannzylinder ist eine Bewegungsbuchse 43 angeordnet, welche über eine Verdrehsicherung 45 mit dem Federspannzylinder 2 drehfest gehalten ist. In der Bewegungsbuchse 43 ist ein Aufnahmeraum 83 vorhanden, in dem die Schraubendruckfedern 9 gelagert sind, die mit ihrem linken Ende teilweise in der Bewegungsbuche 43 aufgenommen sind und dort an dem Anschlag 76 anliegen.

Das rechte Ende der Schraubendruckfedern steht an einem Anschlag 33 an, der sich am Ende eines axial gerichteten Aufnahmeraums 75 im Inneren des glockenartigen Druckstücks 77 befindet. Dazu sind in das Druckstück 77 eine Vielzahl von gleichmäßig über den Umfang angeordneter Bohrungen als Aufnahmeräume 75 eingearbeitet, in denen Schraubendruckfedern 9 mit quadratischen Querschnitt eingesetzt sind.

Somit ist die Schraubendruckfeder 9 zwischen dem Anschlag 76 im Inneren des Aufnahmeraums 83 der Bewegungsbuchs 43 und zwischen dem Anschlag 33 im Inneren des Aufnahmeraums 75 des Druckstücks 77 aufgenommen. Bevorzugt unterliegt die Schraubendruckfeder einer Vorspannung, bevor sie aufgrund der Druckbeaufschlagung komprimiert wird.

Diese Kompression der Schraubendruckfeder wird durch eine Bewegung der Bewegungsbuchse 43 in Pfeilrichtung 16 verursacht, wobei sich der Anschlag 76 in Richtung des Anschlags 33 bewegt.

In dem gezeigten Beispiel nach Figur 1 ist die Schraubendruckfeder 9 im Federspannzylinder 2 maximal gespannt, und die Spannzange 5 oder das Backenfutter ist geöffnet, damit das Werkstück 4 eingelegt werden kann.

Um die Bewegungsbuche 43 für eine Kompression der Schraubendruckfeder 9 zu bewegen, wird das Betätigungsmodul 3 beansprucht, welches in seinem Inneren einen über ein Druckmittel betätigbaren Verstellkolben 34 aufweist.

Ausgehend von dem Anschluss 11 wird das Medium, beispielsweise Druckluft oder Drucköl, über Druckkanäle 21a,b den Druckkammern 19, 20 des Betätigungsmoduls 3 zugeführt. Die Druckkammern 19, 20 erstrecken sich in radialer Richtung und sind jeweils auf ihrer rechten Seite von den Kolbenflächen 39, 40 der sich in radialer Richtung erstreckenden Kolbenrippen 69, 70 des axial verschiebbaren Kolbens 34 begrenzt.

An ihrer linken Seite sind die Druckkammern 19 durch das tellerförmige Kolbengehäuse 89 und die Druckkammer 20 durch das tellerförmige Gehäuse 90 begrenzt, die in den Bereichen parallel zu den Kolbenflächen 39, 40 etwa die gleich große Gegenfläche zu den Kolbenflächen 39, 40 aufweisen und mit den Kolbenflächen die Druckkammern 19, 20 seitlich eingrenzen.

Zwischen den Druckkammern 19, 20 ist eine Feder 46 angeordnet, welche linksseitig in der Kolbenrippe 69 aufgenommen ist und an ihrer rechten Seiten in dem Gehäuse 90 gelagert ist.

Bei einer Druckmittelzuführung steigt der Druck in den Druckkammern 19, 20 und somit auch die Druckkräfte auf die Kolbenflächen 39, 40 der beweglichen Kolbenrippen 69, 70, wodurch sich der daran angeformte Verstellkolben 34 in Pfeilrichtung 16 bewegt.

Mit dem Verstellkolben 34 ist über die Schraube 47 ein Druckring 13 verbunden, der das Kolbenrohr 29 umschließt, von diesem jedoch radial beabstandet angeordnet ist. In dem gezeigten Beispiel nach Figur 1 ist der Druckring 13 über die Schraube 47 mit der rechten Kolbenrippe 70 des Verstellkolbens 34 verbunden.

Durch die Bewegung des Kolbens 34 wird der Druckring 13 somit ebenfalls in Pfeilrichtung 16 bewegt.

Im Druckring 13 ist ein Lagerbolzen 35 aufgenommen, welcher sich in radialer Richtung in Richtung des Kolbenrohrs 29 erstreckt.

Am Ende des Lagerbolzens 35 ist ein Wälzlager 36 drehbar gelagert. Dieses Wälzlager 36 wird durch die Bewegung des Kolbens 34 ebenfalls in Pfeilrichtung 16 bewegt, steht an der Planfläche 71 des Verstellrads 14 an und bewegt dieses ebenfalls in Pfeilrichtung 16.

Das Verstellrad 14 ist drehfest mit dem Kolbenrohr 29 verbunden und bewegt dieses aufgrund der Bewegung des Wälzlagers 36 ebenfalls in Pfeilrichtung 16.

In dem hohlen Kolbenrohr 29 ist ein ebenfalls rohrförmiges Verschiebeteil 10 teilweise aufgenommen. Dieses Verschiebeteil 10 ist in dem hier gezeigten Beispiel nach Figur 1 mit seiner rechten Seite über eine Gewindeverbindung 37 mit dem Kolbenrohr 29 verschraubt und ragt mit seiner linken Seite aus dem Kolbenrohr 29 heraus.

Aufgrund der auftretenden Belastungen in der Spanneinrichtung 1 ist die Gewindeverbindung 37 verschleißfest ausgebildet.

Am linken Ende des Verschiebeteils 10 weist dieses einen radial nach Außen abstehenden Ansatz 38 auf, der werkstoffeinstückig mit dem Verschiebeteil 10 verbunden ist.

Der Ansatz 38 ist über eine Verdrehsicherung mit dem umlaufenden Federspannzylinder 2 verbunden, die aus einem Stehbolzen 72 besteht, der in dem Federspannzylinder 2 fest aufgenommen ist und in einer Aussparung 73 des Verschiebeteils 10 verschiebbar gelagert ist. Durch die Verdrehsicherung ist das Verschiebeteil 10 kraftschlüssig mit dem Federspannzylinder 2 verbunden.

Das Kolbenrohr 29 weist, im Bereich der Überlappung mit dem innenliegenden Verschiebeteil 10, an seinem linken Ende ein radial nach außen abstehenden Ansatz 31 auf. Dieser Ansatz 31 steht an dem Ansatz 42 der Bewegungsbuchse 43 an, die den Ansatz 31 ringförmig umgibt. Der Ansatz 42 der Bewegungsbuche 43 ist radial einwärts gerichtet, wobei an dessen linksseitigen Kontaktfläche 82 der Ansatz 31 des Kolbenrohrs 29 angreift und dadurch bei Bewegung des Kolbenrohrs 29 in Pfeilrichtung 16, ebenfalls in Pfeilrichtung 16 bewegt wird.

Das glockenartige Druckstück 77 umgibt in seiner Längserstreckung das Kolbenrohr 29 und weist an seiner rechten Stirnseite 78 eine Verdrehsicherung 15 auf. Diese Verdrehsicherung 15 besteht aus einem federbelasteten Bolzen, der mit seinem Bolzenende 79 aus einer Bohrung an der Stirnseite 78 aus dem Druckstück 77 herausragt und formschlüssig in eine Aussparung 80 in dem Verstellrad 14 eingreift.

Figur 1 zeigt den Zustand, in dem das Verstellrad 14 durch den Kontakt mit dem Wälzlager in die ausgerückte Position verschoben wird.

Ein Sensor 12 ist am Betätigungsmodul 3 angeordnet und meldet, dass die Spannzange 5 ganz geöffnet ist.

Auch kann über einen optionalen Wegmesssensor die Spannkraftposition abgefragt werden.

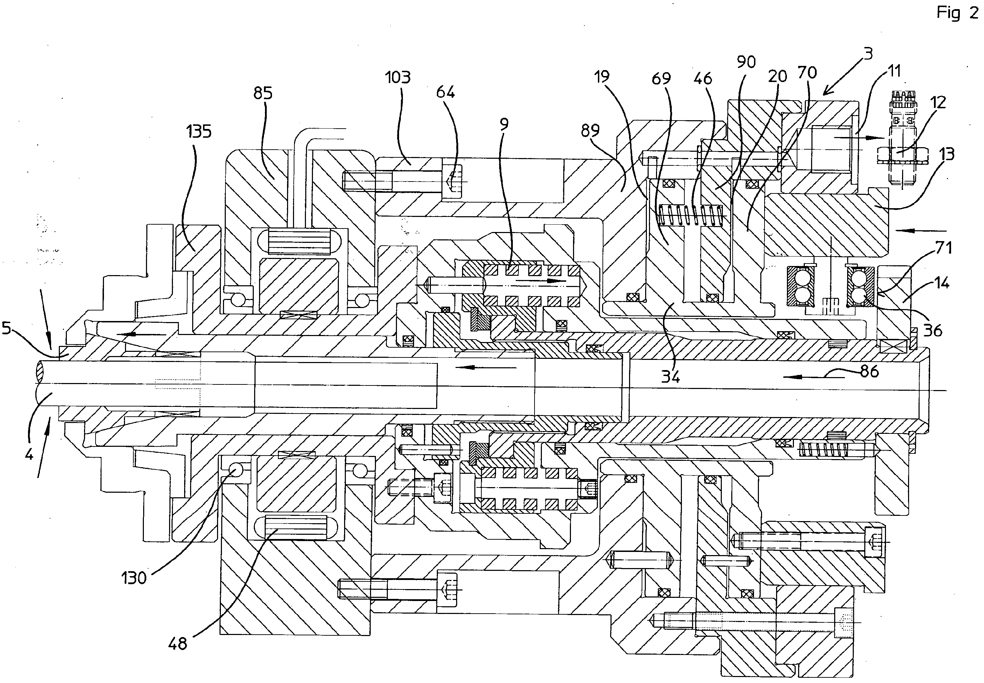

Figur 2 zeigt, dass kein Druck mehr in den Druckkammern vorhanden ist. Die Rückführung der Kolbenrippen 69, 70 wird durch die Rückstellfeder 46 bewerkstelligt, die sich an dem tellerförmigen Gehäuse 90 abstützt. Kommt es nun zu einem Druckabfall in den Druckkammern 19, 20, das ist der Fall, sobald kein Druckmedium mehr von außen über den Anschluss 11 zugeführt wird, entspannt sich die Feder 46 zwischen der Kolbenrippe 69 und dem Gehäuse 90 und drückt die Kolbenrippe 69 in Pfeilrichtung 86. Da die Kolbenrippe 69, ebenso wie die Kolbenrippe 70, fester Bestandteil des Kolbens 34 ist, wird der Kolben 34 ebenfalls aufgrund der Federwirkung in Pfeilrichtung 86 bewegt. Nach Figur 2 ist das Werkstück 4 durch die zuvor eingestellte Federkraft der Schraubendruckfeder 9 in der Spannzange 5 eingespannt.

Durch ein Kolbengehäuse 89 ist das Betätigungsmodul auf der Maschinenspindel 135 zugekehrten Seite verschossen, wobei an dem Kolbengehäuse 89 in axialer Richtung ein Ansatz 103 angeformt ist, der über Schrauben 64 mit dem Spindelstock 85 verschraubt ist. Somit ist das Betätigungsmodul 3 am Spindelstock 85 befestigt, wobei im Spindelstock der Spindelmotor 48 gelagert ist.

Der Spindelstock 85 steht über die Wälzlager 130 auf der Maschinenspindel 135 auf.

Durch die Bewegung des Kolbens 34 in Pfeilrichtung 86 nähert sich die linksseitige Kolbenrippe 69 dem Kolbengehäuse 89 und die rechtsseitige Kolbenrippe 70 dem Gehäuse 90 an und die jeweiligen, zwischen diesen Bauteilen befindlichen, Druckkammern 19, 20 verkleinern sich.

Durch die Entspannung der Feder 46 und die Bewegung des Kolbens 34 in Pfeilrichtung 86 wird auch der mit dem Kolben 34 verbundene Druckring 13 in Pfeilrichtung 86 bewegt. Dadurch hebt sich das Wälzlager 46 von der Planfläche 71 des Verstellrades 14 ab und es besteht kein Kontakt mehr zwischen diesen beiden Bauteilen. Somit ist das Betätigungsmodul 3 nicht mehr in Kontakt mit dem umlaufenden Spannzylinder, da der Druckring 13 mit dem Wälzlager 46 keine axiale Verbindung mit der Planfläche 71 des Verstellrades hat.

Der Sensor 12 ist nicht bedämpft und meldet Werkstück 4 ist gespannt.

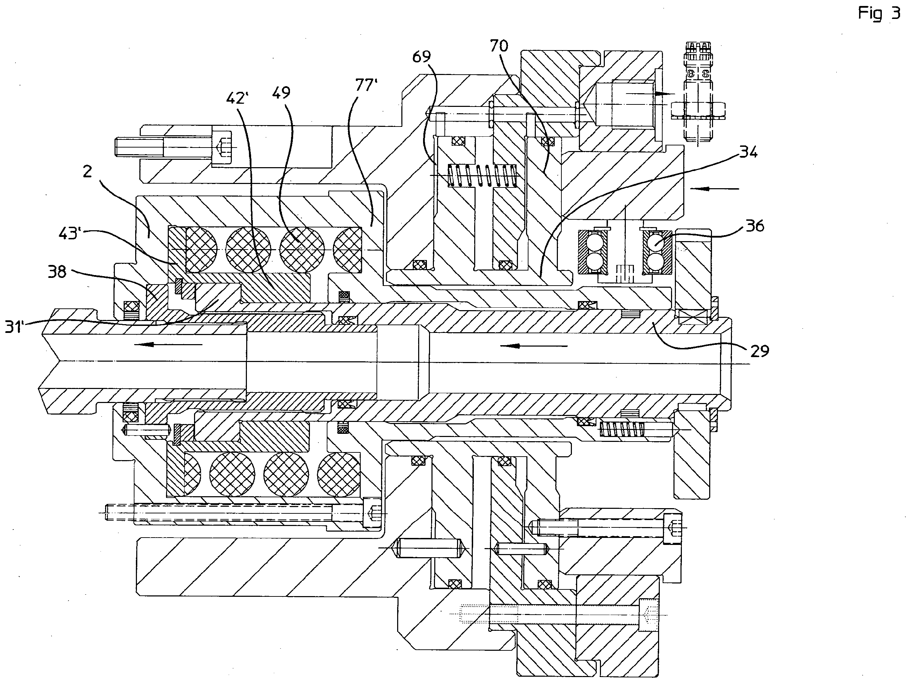

Figur 3 zeigt eine weitere, jedoch nicht erfindungsgemäße Ausführungsform, bei der eine zentrale Druckfeder 49 zwischen den Ansätzen 42' und 31' verwendet wird, welche je nach Anforderung der benötigten Spannkraft, verbaut wird. Die Funktion und die Bezugszeichen sind jedoch gleich wie in dem vorherbeschriebenen Ausführungsbeispiel.

Ein derartiger Federkörper kann beispielsweise aus einem elastomeren Material gebildet sein.

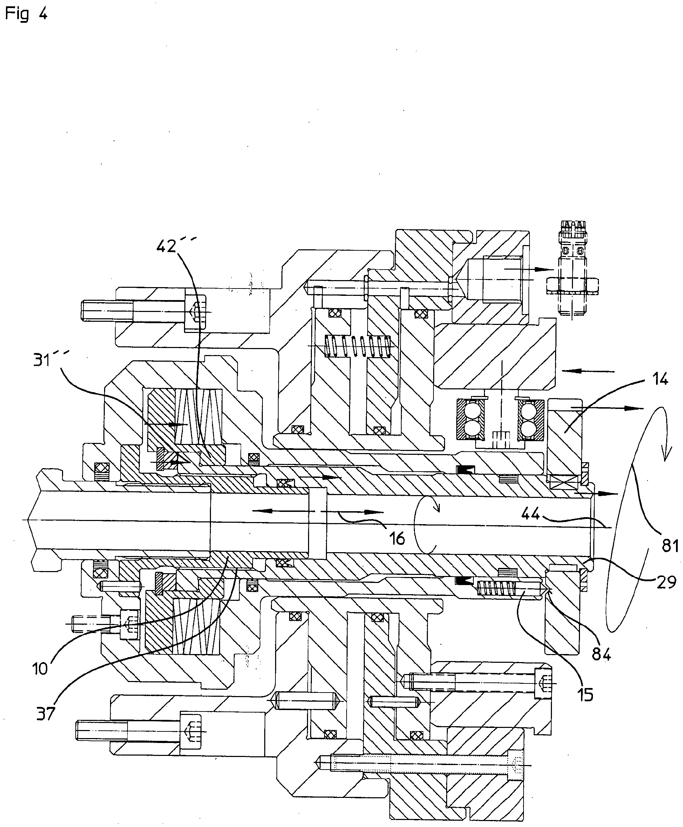

In einer weiteren, ebenfalls nicht von der Erfindung umfassten Ausführungsform nach Figur 4 kann auch eine Tellerfeder verwendet werden, bzw. ein Tellerfederpaket, welches eine äquivalente Ausführungsform zu den zuvor gezeigten Federkörpern darstellt.

Für eine Feineinstellung der Tellerfeder, oder einem anderen Federkörper der vorangegangenen Beispiele, wird das Verstellrad 14, welches am Kolbenrohr 29 drehfest angeordnet ist, beispielsweise in Pfeilrichtung 81 im Uhrzeigersinn um die Achse 44 gedreht. Durch die drehfeste Verbindung mit dem Kolbenrohr 29 wird dieses ebenfalls im Uhrzeigersinn um die Achse 44 gedreht und die Gewindeverbindung 37 beansprucht, wodurch sich das Innengewinde des Kolbenrohrs 29 sich im Uhrzeigersinn entlang des Gewindegangs des Außengewindes des Verschiebteils 10 bewegt.

Durch diese Beanspruchung bleibt das Verschiebeteil 10 stehen und nur das Kolbenrohr 29 wird im Uhrzeigersinn bewegt und wandert in Pfeilrichtung 16. Dadurch wird, bedingt durch die Ansätze 31" und 42", ebenfalls die Spannfeder 29 weiter in Pfeilrichtung 16 komprimiert und eine Feineinstellung erfolgt.

Im Verstellrad 14 sind mehrere Ausnehmungen 84 auf einer Kreisbahn vorhanden, in welche eine Verdrehsicherung 15 bei Drehung des Verstellrades 14 einrasten kann und dieses drehsichert halten kann.

Durch das Verdrehen des Verstellrads 14 kann mehr oder weniger Kompressionskraft eingestellt werden, welche auf die Schraubendruckfeder wirkt. Die Verdrehsicherung 15 drückt sich bei Verdrehung des Verstellrads 14 aus den Ausnehmungen 84 heraus, bis die gewünschte Spannkraft z.B. auch It. Tabelle erreicht ist, bis diese wieder verrastet. Durch die Verstellung dreht sich nur das Kolbenrohr 29 das mit dem Verstellrad 14 über Passfedern oder Stifte trieblich verbunden ist, und spannt oder entspannt den Federkörper, der als Tellerfedern oder Spiralfedern oder elastomeren Federkörper ausgebildet ist.

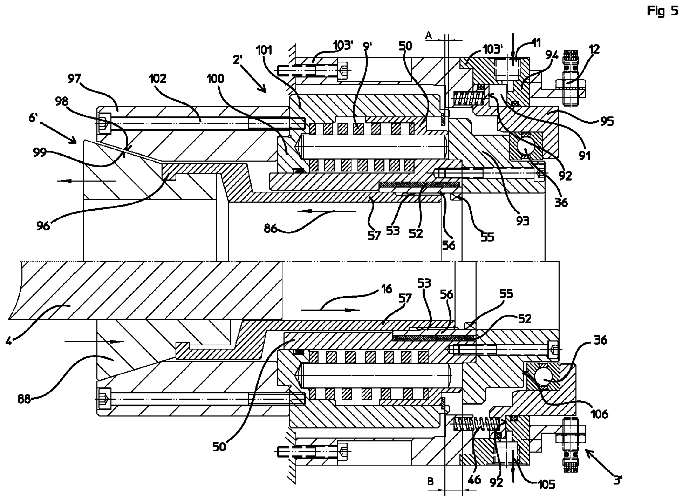

Figur 5 zeigt in einer zweigeteilten Schnittdarstellung, ein weiteres Ausführungsbeispiel einer Zugspannzange, wobei dieses Ausführungsbeispiel nicht von der Erfindung umfasst ist.

In der oberen Ansicht steht Druck an dem Betätigungsmodul 3' an und die Spannzange ist ganz geöffnet, wobei kein Werkstück eingespannt ist. Der Sensor 12 meldet, dass kein Werkstück eingespannt ist. Die Schraubendruckfeder 9' ist in die Stellung mit höchster Spannkraft gedrückt. Die Schraubendruckfeder 9' ist mit ihrer rechten Seite in einer Buchse 50 gelagert ist, wobei ein Ansatz 93 in axialer Richtung auf die rechte Stirnseite der Buchse 50 wirkt.

Mit ihrer linken Seite ist die Schraubendruckfeder 9' in einem Aufnahmeteil 101 gehalten, welches sich über einen Schenkel 100 verschiebbar auf der Buchse 50 abstützt. Das Aufnahmeteil 101 ist mit seiner linken Stirnseite, über eine Schraube 102, drehfest mit der Glocke 97 verbunden. Die Glocke 97 weist an ihrem dem Werkstück zugewandten Ende einen konischen Bereich 98 am Innenumfang auf, der mit einem konischen Bereich 99 am Außenumfang der Zugspannzange 88 zusammenwirkt.

Bedingt durch die in gleicher Richtung (Pfeilrichtung 86) ansteigenden konischen Bereiche 98, 99 wird bei einer Bewegung der Glocke 97 in axialer Richtung, die Zugspannzange 88 radial nach innen verschoben, so dass die Spannbacken der Zugspannzange 88 gegen das Werkstück 4 gedrückt werden und dieses somit in dem Kraftspannfutter 6' einspannen.

Die Schraubendruckfeder 9', welche zwischen Aufnahmeteil 101 und Buchse 50 aufgenommen ist, wird durch eine Bewegung der Buchse in Pfeilrichtung 86 relativ zum Aufnahmeteil 101 komprimiert.

Eine derartige Bewegung der Buchse 50 wird durch den an der Buchse anstehenden Ansatz 93 bewirkt, wobei der Ansatz wiederrum von einem Wälzlager 36 in Pfeilrichtung 86 gedrückt wird.

Das Wälzlager, welches in der oberen Ansicht an dem Ansatz 93 anliegt, ist mit einem Druckring 95 verbunden.

Der Druckring 95 besitzt im oberen Bereich eine Kolbenfläche 92, welche zusammen mit der Gegenfläche des Festteils 94 einen Druckraum 91, im Inneren des Betätigungsmoduls 3' eingrenzt.

Die Einleitung eines Druckmediums in den Druckraum 91 führt bei ansteigendem Druck zu einer Verschiebung der Kolbenfläche und somit zu einer Verschiebung des Druckrings 95 in Pfeilrichtung 86. Durch die Verschiebung des Druckrings drückt das damit verbundene Wälzlager 36 auf den Ansatz 93 und die Schraubendruckfeder 9' wird in Pfeilrichtung 86 komprimiert.

Die untere Ansicht der Figur 5 zeigt ein druckloses Betätigungsmodul 3', wobei das Druckmedium in Pfeilrichtung 105 aus dem Betätigungsmodul entweicht. Da nun keine Druckkraft mehr auf die Kolbenfläche 92 wirkt, wird der Druckring 95, bedingt durch eine Entspannung der Feder 46, in Pfeilrichtung 16 bewegt und das damit verbundene Wälzlager 36 hebt sich von der Kontaktfläche 106 des Ansatzes 93 ab.

Die Feder 46 stützt sich dabei an dem Ansatz 103' ab und schiebt bei Entspannung den Kolben in Pfeilrichtung 16.

In dieser Situation ist die Schraubendruckfeder 9' soweit entspannt, dass die Spannkraft ausreicht um das Werkstück 4 zu halten.

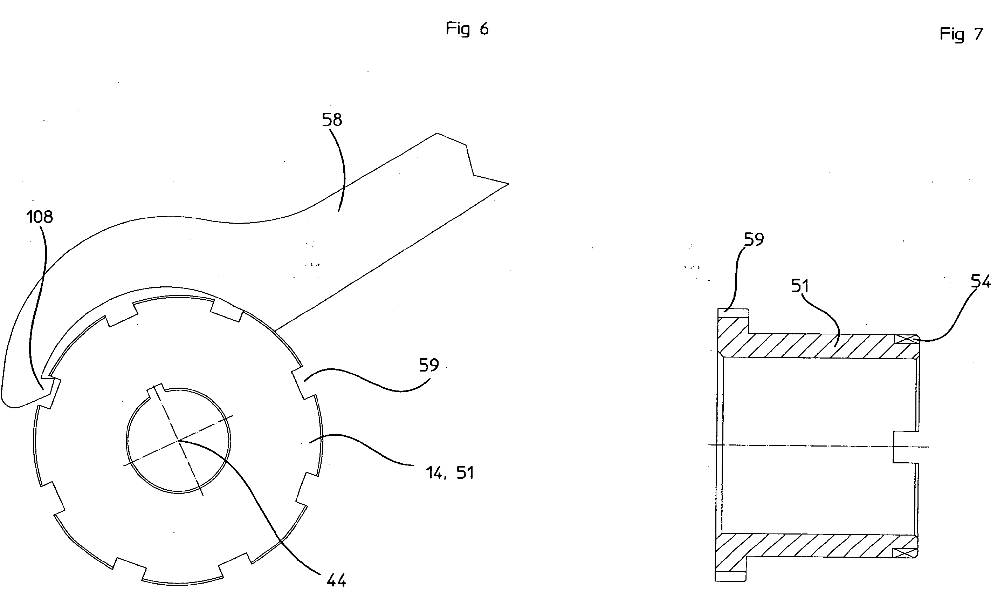

Für eine Feineinstellung der Federspannkraft der Schraubendruckfeder 9', kann eine in Figur 7 gezeigte Verstellrad-Buchse 51 in das Betätigungsmodul 3' in Pfeilrichtung 86 eingeschoben werden. Die Verstellrad-Buchse 51 weist an ihrem Umfang Positionierflächen 54 auf, die mit kreisförmig angeordneten Nasen 55 im Inneren des Verstellteils 56 zusammenwirken und bei einer Drehbewegung der Verstellrad-Buchse 51, diese Drehbewegung kraftschlüssig auf das Verstellteil 56 übertragen können.

Durch die Drehung der Verstellrad-Buchse 51 dreht sich das in einer Gleitbuchse 52 drehbar gelagerte Verstellteil 56 unterhalb des Federspannzylinders 2'. Die Gleitbuchse 52 ist in der Buchse 50 gelagert.

Die Verstellteil 56 ist über eine Gewindeverbindung 53 mit der Zugstange 57 verbunden. Dazu weist das Verstellteil 56 ein Innengewinde und die Zugstange 57 ein Außengewinde auf.

Durch den Gewindeeingriff verursacht die rotatorische Bewegung des Verstellteils 56 eine translatorische Bewegung der Zugstange 57.

Durch die Bewegung der Zugstange 57 wird die mit der Zugstange verbundene Zugspannzange 88 axial bewegt und somit die Spankraft eingestellt.

Im hier gezeigten Beispiel wird die Zugspannzange 88 in Pfeilrichtung 16 gezogen, wodurch sich die Zugspannzange 88 mit ihrem konischen Bereich 99 entlang des konisches Bereiches 98 der Glocke 97 bewegt und die Zugspannzange 88 somit in Richtung des Werkstücks 4 gedrückt wird.

Nach getätigter Feineinstellung wird die Verstellrad-Buchse 51 wieder aus dem Betätigungsmodul 3' entfernt.

Ein stationärer Sensor 12 erkennt die Position des relativ dazu beweglichen Druckrings 95 und kann dadurch darauf schließen, ob ein Werkstück eingespannt ist oder nicht.

Figur 6, welche nicht von der Erfindung umfasst ist, zeigt ein Verstellrad 14 oder welches auch die Stirnseite der Verstellrad-Buchse 51 zur Einstellung der Federspannkraft bilden kann, wobei beide Teile die gleichen Angriffsmöglichkeiten für ein Werkzeug aufweisen.

So kann ein Hakenschlüssel (z.B. DIN1810) mit seinem Haken 108 in die kreisförmig am Außenumfang des Vestellrades bzw. der Verstellrad-Buche 51 angeordnete Nuten ein und dreht Das Vestellrad bzw. die Buchse um die Achse 44.

Figur 7 zeigt eine Schnittdarstellung der Verstellrad-Buchse 51 die mit dem Hakenschlüssel verdreht werden kann. Nach der Einstellung wird die Verstellrad-Buchse 51 wieder aus dem Betätigungsmodul abgezogen.

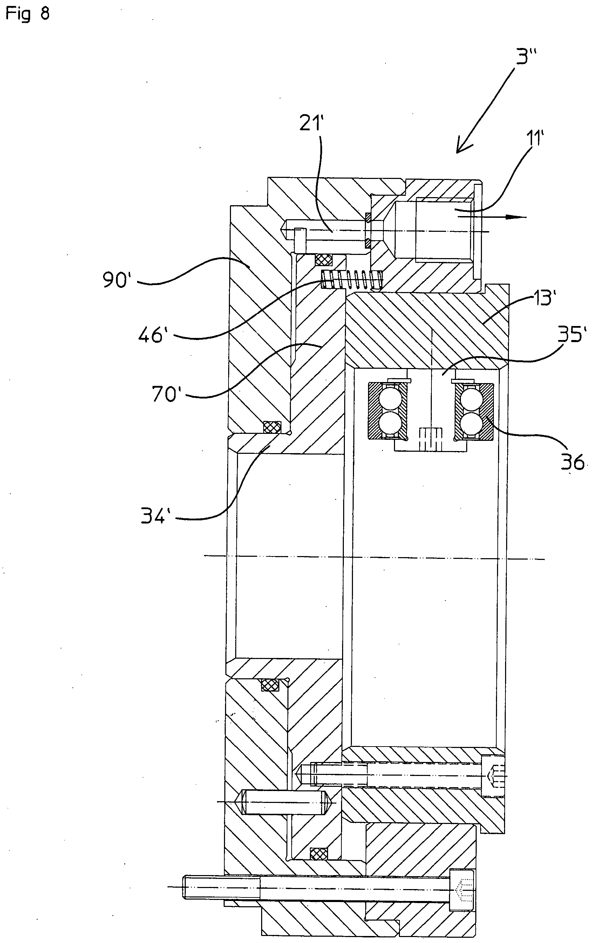

Figur 8 zeigt ein druckloses Betätigungsmodul 3" mit einem einfachen Verstellkolben 34' mit einer Kolbenrippe 70'einer Ausführungsform, wobei nur ein Kolben verwendet wird. Der Verstellkolben 34' wird durch die eingebaute Feder 46' gegen das Feststeil 90' gedrückt.

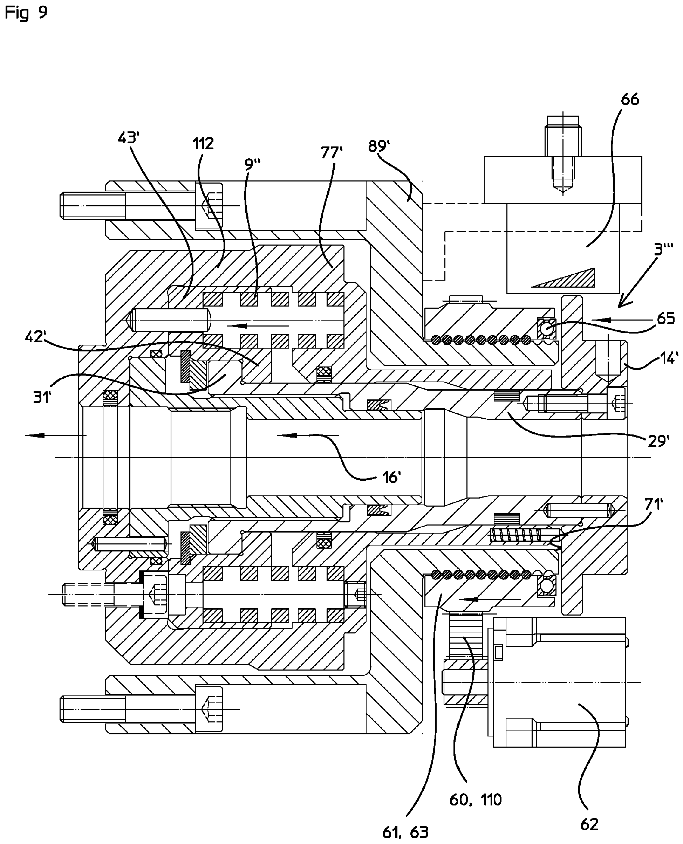

Figur 9 zeigt ein elektrisches Verstellsystem in Ruhestellung, mit einer Kugelrollspindel 63 zur Einstellung der Druckspannzange, wobei kein Werkstück eingelegt ist.

Die Schraubendruckfeder 9" am Spannzylinder 112 ist minimal mit einer Vorspannkraft gespannt, die in Pfeilrichtung 16' wirkt. Die nicht gezeigte Druckspannzange oder das Backenfutter sind geschlossen.

Der Druckring des Betätigungsmoduls 3‴ wird in dieser Ausführungsform durch die Kugelrollmutter 61 gebildet, an deren rechten Seite ein Wälzlager 65 angebracht ist.

Betätigungsmodul 3‴ ist hierbei nicht mit dem Spannzylinder112 verbunden, da das Wälzlager 65 keine axiale Verbindung mit der Planfläche 71' des Verstellrades 14' hat.

Für die Erzeugung einer Spannung wird dem Motor 62 Energie zugeführt, damit dieser über einen Riemenantrieb 60 den Riemen 110 in Bewegung setzt, der die Kugelrollspindel 63 und somit die Kugelrollmutter 61 antreibt.

Die Kugelrollmutter 61 würde dann das Verstellrad 14' über das Wälzlager 65 gegen die Planfläche 71' des Verstellrads 14' drücken, welches drehfest mit dem Kolbenrohr 29' verbunden ist. Das Kolbenrohr 29' liegt mit einem radial nach außen abstehenden Ansatz 31' an dem radial nach innen gerichteten Ansatz 42' der Bewegungsbuchse 43' an.

Durch eine Bewegung des Kolbenrohrs 29' entgegen der Pfeilrichtung 16' würde nun die Bewegungsbuchs 43' die Schraubendruckfeder 9" entgegen der Pfeilrichtung 16' komprimieren.

Sämtliche axiale Bewegungen des Verstellrads 14' lassen sich von einem analogen Wegmesssensor 66 erfassen, der durch die erfasste Wegstrecke auf die Spannkraft schließt.

Ist nun ein Werkstück eingelegt, treibt der Motor 62 den Riemen 110 in die entgegengesetzte Richtung an und die Kugelrollmutter 61 läuft in Pfeilrichtung 116 und hebt das Wälzlager 65 von der Planfläche 71' ab.

Ein Werkstück wird somit nur noch durch die Spannkraft der Schraubendruckfeder 9" gespannt.

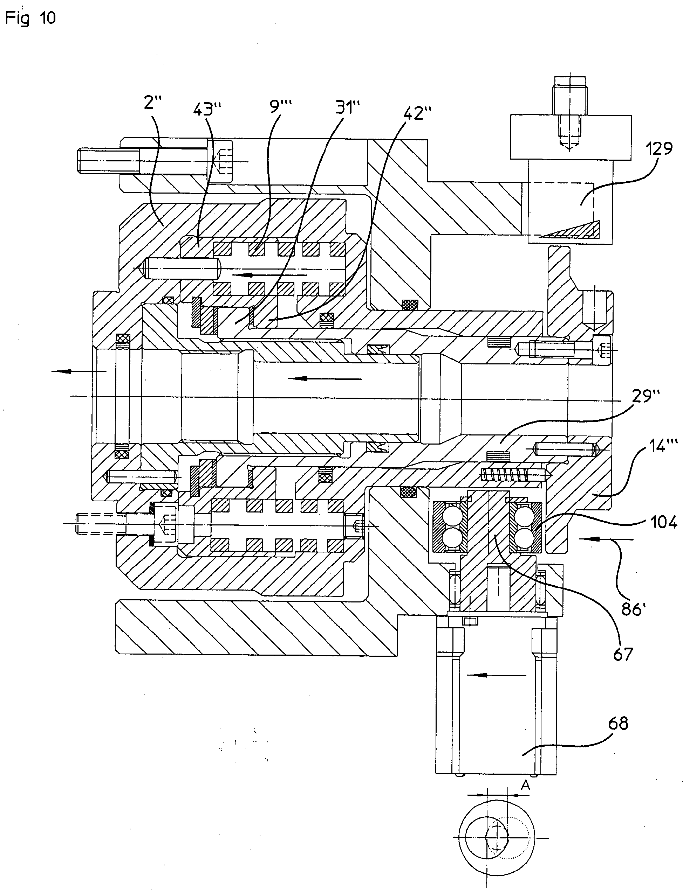

Figur 10 zeigt elektrisches Verstellsystem unter Verwendung eines Exzenterantriebs 68, der eine Exzenterwelle 67 antreibt. Es handelt sich hierbei um eine 180° Exzenter-Verstellung für eine nicht gezeigte Druckspannzange in Ruhestellung.

Die Exzenterwelle 67 zeigt senkrecht auf das Kolbenrohr 29" und trägt an ihrem Umfang ein Wälzlager 104. Je nach Stellung der Exzenterwelle 67 wird das Wälzlager 104 an das Verstellrad 14" heran oder davon wegbewegt.

Die Schraubendruckfeder 9‴ am Federspannzylinder 2" sind minimal gespannt und über eine Vorspannkraft in Pfeilrichtung 86' aus.

Um die Schraubendruckfedern zu komprimieren, bewegt die Exzenterwelle 67 das Wälzlager 104 an das Verstellrad 14‴ und drückt dieses entgegen der Pfeilrichtung 86' axial nach hinten. Durch die Bewegung des Verstellrad 14‴, zieht dieses das damit drehfest verbundene Kolbenrohr 29" ebenfalls in diese Richtung.

Das Kolbenrohr 29" weist einen radial nach außen abstehenden Ansatz 31" auf der mit einem Ansatz 42" einer Bewegungsbuchse 43" wirkt und diese somit ebenfalls entgegen der Pfeilrichtung 86' bewegt. Dadurch wird die an der Bewegungsbuchse 43" anstehende Schraubendruckfeder 9‴ komprimiert. Nach Einlegung eines nicht gezeigten Werkstücks bewegt der Exzenterantrieb 68 das Wälzlager 104 von dem Verstellrad 14‴ weg bis keine Verbindung mehr besteht. Das Werkstück wird nun nur durch die Spannkraft der Schraubendruckfedern 9‴ gehalten.

Sämtliche Bewegungen des Verstellrades lassen sich mit dem Wegmesssensor 129 erfassen, der aus der erfassten Wegstrecke auf die Spannkraft schließt.

### Zeichnungslegende

- 1.: Spannzylinder
- 2.: Federspannzylinder 2', 2"
- 3.: Betätigungsmodul 3', 3", 3‴
- 4.: Werkstück
- 5.: Spannzange
- 6.: Kraftspannfutter 6'
- 7.: Spindelmotor
- 9.: Schraubendruckfeder 9', 9"
- 10.: Verschiebeteil
- 11.: Anschluss (Pneumatisch/Hydraulische) 11‴
- 12.: Sensor
- 13.: Druckring 13'
- 14.: Verstellrad 14', 14", 14‴
- 15.: Verdrehsicherung
- 16.: Pfeilrichtung 16'
- 18.: Zugrohr
- 19.: Druckkammer
- 20.: Druckkammer
- 21.: Druckkanäle 21a, 21b, 21'
- 29.: Kolbenrohr 29', 29"
- 31.: Ansatz 31', 31"
- 33.: Anschlag
- 34.: Verstellkolben 34'
- 35.: Lagerbolzen 35'
- 36.: Wälzlager 36'
- 37.: Gewindeverbindung
- 38.: Ansatz
- 39.: Kolbenfläche (von 19)
- 40.: Kolbenflächen (von 20)
- 42.: Ansatz (von 29) 42', 42"
- 43.: Bewegungsbuchse 43', 43"
- 44.: Achse
- 45.: Verdrehsicherung
- 46.: Rückstellfeder 46'
- 47.: Schraubverbindung
- 48.: Spindelmotor
- 49.: Druckfeder
- 50.: Buchse
- 51.: Verstellradbuchse
- 52.: Gleitbuchse
- 53.: Gewindeverbindung
- 54.: Positionierfläche
- 55.: Nase
- 56.: Verstellteil
- 57.: Zugstange
- 58.: Werkzeug
- 59.: Nut
- 60.: Riemenantrieb
- 61.: Kugelrollmutter
- 62.: Motor
- 63.: Kugelrollspindel
- 64.: Schraube
- 65.: Wälzlager
- 66.: Weg-Messsensor
- 67.: Exzenterwelle
- 68.: Exzenterantrieb
- 69.: Kolbenrippe (von 19)
- 70.: Kolbenrippe (von 20)
- 71: Planfläche 71'
- 72.: Stehbolzen
- 73.: Aussparrung
- 75.: Aufnahmeraum
- 76.: Anschlag
- 77.: Druckstück 77'
- 78.: Stirnseite (von 77)
- 79.: Bolzenende
- 80.: Aussparung
- 81.: Pfeilrichtung
- 82.: Kontaktfläche (von 32)
- 83.: Aufnahmeraum (von 43)
- 84.: Ausnehmung
- 85.: Spindelstock
- 86.: Pfeilrichtung
- 89.: 88.Zugspannzange Kolbengehäuse 89'
- 90.: Gehäuse (tellerförmig)
- 91.: Druckkammer
- 92.: Kolbenfläche
- 93.: Ansatz
- 94.: Festteil
- 95.: Druckring
- 96.: Betätigungsnase
- 97.: Glocke
- 98.: konischer Bereich (von 97)
- 99.: konischer Bereich (von 104)
- 100.: Schenkel
- 101.: Aufnahmeteil
- 102.: Schraube
- 103.: Ansatz 103'
- 104.: Wälzlager
- 105.: Pfeilrichtung
- 106.: Kontaktfläche
- 108.: Haken
- 109.: Schraubendruckfeder
- 110.: Riemenantrieb
- 112.: Spannzylinder
- 129.: Wegmesssensor
- 130.: Lager
- 131.: Glocke
- 132.: konischer Bereich (von 134)
- 133.: konischer Bereich (von 18)
- 134.: Spannbacken
- 135.: Maschinenspindel
- 136.: Flansch
- 137.: Schraube
- 138.: Kraftspeicher
- 139.: Bohrung (von 77)
- 140.: Hohlwelle

## Patentansprüche

1. Spanneinrichtung (1) für Werkzeugmaschinen, wobei die Spanneinrichtung ein Kraftspannfutter (6) mit Spannbacken (134) zur Halterung eines Werkstücks (4), ein axial verstellbares, rohrförmiges Verstellglied (10, 18, 29, 29'), ein Betätigungsmodul (3, 3", 3‴) zur Betätigung der Spannbacken (134) über das Verstellglied (10, 18, 29, 29'), und eine Maschinen-Spindel (135) mit einem glockenförmigen Spannzylinder (2 2', 2", 112) umfasst, wobei das Verstellglied (10, 18, 29, 29') einen radial nach außen abstehenden Ansatz (31, 31' 31") aufweist, wobei die Spanneinrichtung (1) zur Umsetzung der zur Betätigung der Spannbacken (134) erforderlichen axialen Verstellbewegungen des Verstellglieds (10, 18, 29) einen Kraftspeicher (138) innerhalb des Spannzylinders (2, 2', 2", 112) der Maschinen-Spindel (135) zur Aufrechterhaltung der Spannkraft aufweist, der aus mindestens einer vorgespannten Feder (9, 9', 9", 49) besteht, die an dem Ansatz (31, 31', 31") des Verstellgliedes (10, 18, 29, 29') abgestützt ist, und wobei in einem umlaufenden Betriebszustand: der Spannzylinder (2, 2', 2", 112) dazu ausgebildet ist mit der Maschinen-Spindel umzulaufen, das Betätigungsmodul (3, 3", 3‴) dazu ausgebildet ist stillzustehen und das Betätigungsmodul (3, 3", 3‴) berührungsfrei vom Spannzylinder (2, 2', 2", 112) trennbar ist **dadurch gekennzeichnet, dass** das Verstellglied gebildet ist durch ein Zugrohr (18), welches mit seinem dem Kraftspannfutter (6) abgewandten Ende mindestens teilweise in ein rohrförmiges Verschiebeteil (10) fest aufgenommen ist und dass das Verschiebeteil (10) über eine Gewindeverbindung (37) mit einem hohlen, ebenfalls rohrförmigen Kolbenrohr (29, 29', 29") verbunden ist und in dem hohlen Kolbenrohr (29, 29', 29") teilweise aufgenommen ist, und das Kolbenrohr (29, 29', 29") in einem Bereich einer Überlappung mit dem innenliegenden Verschiebeteil (10) den Ansatz (31, 31', 31") aufweist, der an einem radial einwärts gerichtet Ansatz (42, 42', 42") einer Bewegungsbuchse (43, 43', 43") der Spanneinrichtung (1) ansteht, die den Ansatz (31, 31', 31") des Kolbenrohrs (29, 29', 29") ringförmig umgibt und in der die mindestens eine Feder (9, 9', 9", 49) gelagert ist, und dass bei manueller Verdrehung des Kolbenrohrs (29, 29', 29") relativ zu dem Verschiebeteil (10) mit einem drehfest mit dem Kolbenrohr (29, 29', 29") verbundenen Verstellrad (14, 14', 14", 14‴) die Kompressionskraft des Kraftspeichers (138) axial verstellbar ist, und dass zur Veränderung der Spannkräfte des Kraftspeichers (138) das Betätigungsmodul (3, 3", 3‴) über ein oder mehrere Wälzlager, oder über Druckrollen oder Drucklager (36, 65, 104) des Betätigungsmoduls (3. 3', 3", 3‴) kurzzeitig an dem Verstellrad (14, 14', 14", 14‴) andockbar ist.

2. Spanneinrichtung (1) nach Anspruch 1, **dadurch gekennzeichnet, dass** das Betätigungsmodul (3, 3", 3"') mit einem Wälzlager (36) an einer Planfläche (71) des Verstellrads (14) andockbar ist.

3. Spanneinrichtung (1) nach Anspruch 1 oder 2, **dadurch gekennzeichnet, dass** der Kraftspeicher (138) aus einer Vielzahl gleichmäßig über den Umfang verteilt angeordneten Schraubendruckfedern (9, 9', 9") oder Federpaketen oder elastomeren Federkörpern besteht, die in einem Aufnahmeraum (83) der Buchse (43, 43', 43") innerhalb des Spannzylinders (2, 2', 2", 112) gelagert sind.

4. Spanneinrichtung (1) nach einem der Ansprüche 1 bis 3, **dadurch gekennzeichnet, dass** der Spannzylinder (2, 2', 2", 112) mit der drehbaren Maschinen-Spindel (135) verschraubt ist und das Betätigungsmodul (3, 3", 3‴) mit einem ortsfesten Spindelstock (85) verschraubbar ist.

5. Spanneinrichtung (1) nach einem der Ansprüche 1 bis 4, **dadurch gekennzeichnet, dass** über die im Spannzylinder (2, 2', 2", 112) eingebaute Feder oder eingebauten Federn (9, 9', 9", 49) die Zug- oder Druckkraft auf das Kraftspannfutter (6) bestimmbar ist.

6. Spanneinrichtung (1) nach einem der Ansprüche 1 bis 5, **dadurch gekennzeichnet, dass** das Betätigungsmodul (3, 3", 3‴) einen beweglichen Verstellkolben (34, 34') aufweist, dessen Kolbenflächen (39, 40, 92) im Koppelzustand mit Luft- oder Öldruck beaufschlagbar sind.

7. Spanneinrichtung (1) nach einem der Ansprüche 1 bis 6, **dadurch gekennzeichnet, dass** nach der Veränderung der Federspannung im Spannzylinder (2, 2', 2", 112) das Betätigungsmodul (3, 3", 3‴) drucklos schaltbar ist und vom Spannzylinder (2, 2', 2", 112) berührungsfrei abkoppelbar ist.

8. Spanneinrichtung (1) nach einem der Ansprüche 1 bis 7, **dadurch gekennzeichnet, dass** die Feder oder Federn (9, 9', 9", 49) innerhalb des Spannzylinders (2, 2', 2", 112) über das Zugrohr (18) auf das Kraftspannfutter (6) wirken, wobei der Spannungszustand eines Werkstückes (4) elastisch sicherbar ist.

9. Spanneinrichtung (1) nach einem der Ansprüche 1 bis 8, **dadurch gekennzeichnet, dass** das Betätigungsmodul (3, 3", 3‴) ein oder zwei Kolbenflächen (39, 40, 92) aufweist, deren Größe bei Druckbeaufschlagung der maximalen Feder- und Spannkraft entspricht.

10. Spanneinrichtung (1) nach einem der Ansprüche 1 bis 9, **dadurch gekennzeichnet, dass** das Verschiebeteil (10) über ein Außengewinde mit einem Innengewinde des Kolbenrohrs (29, 29', 29") verbunden ist.

11. Spanneinrichtung (1) nach einem der Ansprüche 1 bis 10, **dadurch gekennzeichnet, dass** der geöffnete Zustand des Kraftspannfutters (6) durch einen BERO Näherungsschalter **der** Spanneinrichtung (1) überwachbar ist.

12. Spanneinrichtung (1) nach einem der Ansprüche 1 bis 11, **dadurch gekennzeichnet, dass** ein Federweg der Feder oder der Federn (9, 9', 9", 49) durch einen Wegmesssensor (129) der Spanneinrichtung (1) überwachbar oder messbar ist.

## Claims

1. A clamping device (1) for machine tools, wherein the clamping device comprises a power chuck (6) with clamping jaws (134) for holding a workpiece (4), an axially adjustable, tubular adjusting member (10, 18, 29, 29'), an actuation module (3, 3'', 3‴) for actuating the clamping jaws (134) via the adjusting member (10, 18, 29, 29'), and a machine spindle (135) with a bell-shaped clamping cylinder (22', 2", 112), wherein the adjusting member (10, 18, 29, 29') has a radially outwardly projecting protrusion (31, 31', 31''), wherein, for implementing the axial adjustment movements of the adjusting member (10, 18, 29) required to actuate the clamping jaws (134), the clamping device (1) has a force accumulator (138) within the clamping cylinder (2, 2', 2", 112) of the machine spindle (135) for maintaining the clamping force, which consists of at least one preloaded spring (9, 9', 9", 49) that is supported on the protrusion (31, 31', 31") of the adjusting member (10, 18, 29, 29'), and wherein in a rotating operating state: the clamping cylinder (2, 2', 2", 112) is designed to rotate with the machine spindle, the actuation module (3, 3'', 37‴) is designed to remain stationary, and the actuation module (3, 3", 3‴) can be separated from the clamping cylinder (2, 2', 2", 112) without contact, **characterised in that** the adjusting member is formed by a drawbar (18) that is fixedly received at least partially in a tubular displacement member (10) with its end facing away from the power chuck (6), and **in that** the displacement element (10) is connected via a threaded connection (37) to a hollow, likewise tubular piston tube (29, 29', 29'') and is partially received in the hollow piston tube (29, 29', 29"), and the piston tube (29, 29', 29'') has, in a region of overlap with the inner displacement element (10), the protrusion (31, 31', 31'') that abuts against a radially inwardly directed protrusion (42, 42', 42") of a movement bushing (43, 43', 43") of the clamping device (1), which surrounds the protrusion (31, 31', 31") of the piston tube (29, 29', 29'') in an annular manner and in which the at least one spring (9, 9', 9", 49) is mounted, and **in that**, when the piston tube (29, 29', 29'') is manually turned relative to the displacement part (10), the compression force of the force accumulator (138) can be axially adjusted by means of an adjusting wheel (14, 14', 14'', 14‴) connected to the piston tube (29, 29', 29") in a rotationally fixed manner, and **in that**, for changing the clamping forces of the force accumulator (138), the actuation module (3, 3'', 3‴) can be briefly docked to the adjusting wheel (14, 14', 14", 14‴) via one or more roller bearings or via pressure rollers or pressure bearings (36, 65, 104) of the actuation module (3, 3', 3'', 3‴).

2. The clamping device (1) according to claim 1, **characterised in that** the actuation module (3, 3", 3‴) can be docked to a flat surface (71) of the adjusting wheel (14) by means of a roller bearing (36).

3. The clamping device (1) according to claim 1 or 2, **characterised in that** the force accumulator (138) consists of a plurality of helical compression springs (9, 9', 9") or spring assemblies or elastomeric spring bodies, which are evenly distributed around the circumference and mounted in a receiving space (83) of the bushing (43, 43', 43'') inside the clamping cylinder (2, 2', 2", 112).

4. The clamping device (1) according to any one of claims 1 to 3, **characterised in that** the clamping cylinder (2, 2', 2", 112) is screwed to the rotatable machine spindle (135) and the actuation module (3, 3'', 3‴) can be screwed to a fixed spindle block (85).

5. The clamping device (1) according to any one of claims 1 to 4, **characterised in that** the tension or compression force on the power chuck (6) can be determined via the spring or springs (9, 9', 9", 49) built into the clamping cylinder (2, 2', 2", 112).

6. The clamping device (1) according to any one of claims 1 to 5, **characterised in that** the actuation module (3, 3", 3‴) has a movable adjustment piston (34, 34'), the piston surfaces (39, 40, 92) of which can be acted upon by air or oil pressure when coupled.

7. The clamping device (1) according to any one of claims 1 to 6, **characterised in that**, after the spring tension in the clamping cylinder (2, 2', 2", 112) has been changed, the actuation module (3, 3'', 3‴) can be switched to unpressurised and can be decoupled from the clamping cylinder (2, 2', 2", 112) without contact.

8. The clamping device (1) according to any one of claims 1 to 7, **characterised in that** the spring or springs (9, 9', 9", 49) act within the clamping cylinder (2, 2', 2", 112) via the drawbar (18) on the power chuck (6), wherein the clamping state of a workpiece (4) can be secured elastically.

9. The clamping device (1) according to any one of claims 1 to 8, **characterised in that** the actuation module (3, 3'', 3‴) has one or two piston surfaces (39, 40, 92), the size of which corresponds to the maximum spring and clamping force when pressure is applied.

10. The clamping device (1) according to any one of claims 1 to 9, **characterised in that** the displacement part (10) is connected to an internal thread of the piston tube (29, 29', 29") via an external thread.

11. The clamping device (1) according to any one of claims 1 to 10, **characterised in that** the open state of the power chuck (6) can be monitored by a BERO proximity switch of the clamping device (1).

12. The clamping device (1) according to any one of claims 1 to 11, **characterised in that** a spring travel of the spring or springs (9, 9', 9", 49) can be monitored or measured by a travel measurement sensor (129) of the clamping device (1).

## Revendications

1. Dispositif de serrage (1) pour machines-outils, dans lequel le dispositif de serrage comprend un mandrin de serrage à force (6) comprenant des mâchoires de serrage (134) pour le maintien d'une pièce à usiner (4), un élément de réglage (10, 18, 29, 29') tubulaire, réglable axialement, un module d'actionnement (3, 3", 3"') pour l'actionnement des mâchoires de serrage (134) par l'intermédiaire de l'élément de réglage (10, 18, 29, 29'), et
une broche de machine (135) comprenant un cylindre de serrage (2, 2', 2", 112) en forme de cloche, dans lequel l'organe de réglage (10, 18, 29, 29') présente une saillie (31, 31', 31") faisant saillie radialement vers l'extérieur, dans lequel, pour mettre en œuvre les mouvements de réglage axiaux de l'élément de réglage (10, 18, 29) nécessaires à l'actionnement des mâchoires de serrage (134), le dispositif de serrage (1) présente un accumulateur de force (138) à l'intérieur du cylindre de serrage (2, 2', 2", 112) de la broche de machine (135) pour maintenir la force de serrage, qui est constitué d'au moins un ressort (9, 9', 9", 49) précontraint, qui est en appui sur la saillie (31, 31', 31") de l'élément de réglage (10, 18, 29, 29'), et dans lequel dans un état de fonctionnement rotatif : le cylindre de serrage (2, 2', 2", 112) est réalisé pour tourner avec la broche de machine, le module d'actionnement (3, 3", 3"') est réalisé pour s'immobiliser et le module d'actionnement (3, 3", 3"') peut être séparé sans contact du cylindre de serrage (2, 2', 2", 112), **caractérisé en ce que** l'élément de réglage est formé par un tube de traction (18), lequel, avec son extrémité opposée au mandrin de serrage à force (6), est au moins partiellement reçu dans une pièce coulissante (10) tubulaire et que la pièce coulissante (10) est reliée par l'intermédiaire d'une liaison filetée (37) à un tube de piston (29, 29', 29") creux, également tubulaire, et est reçue en partie dans le tube de piston (29, 29', 29") creux, et le tube de piston (29, 29', 29") présente, dans une zone d'un chevauchement avec la pièce coulissante (10) intérieure, la saillie (31, 31', 31"), qui se trouve sur une saillie (42, 42', 42") orientée radialement vers l'intérieur d'une douille de mouvement (43, 43', 43") du dispositif de serrage (1), qui entoure annulairement la saillie (31, 31', 31") du tube de piston (29, 29', 29") et dans laquelle l'au moins un ressort (9, 9', 9", 49) est logé, et qu'en cas de rotation manuelle du tube de piston (29, 29', 29") par rapport à la pièce coulissante (10) avec une molette de réglage (14, 14', 14", 14"') reliée de manière solidaire en rotation au tube de piston (29, 29', 29"), la force de compression de l'accumulateur de force (138) est réglable axialement, et que pour modifier les forces de serrage de l'accumulateur de force (138), le module d'actionnement (3, 3", 3") peut être arrimé momentanément à la molette de réglage (14, 14', 14", 14") par l'intermédiaire d'un ou plusieurs paliers à roulement, ou par l'intermédiaire de galets de pression ou paliers de pression (36, 65, 104) du module d'actionnement (3, 3', 3", 3").

2. Dispositif de serrage (1) selon la revendication 1, **caractérisé en ce que** le module d'actionnement (3, 3", 3"') peut être arrimé avec un roulement (36) à une surface plane (71) de la molette de réglage (14).

3. Dispositif de serrage (1) selon la revendication 1 ou 2, **caractérisé en ce que** l'accumulateur de force (138) est constitué d'une pluralité de ressorts de pression hélicoïdaux (9, 9', 9") ou groupes de ressorts ou corps de ressort élastomères répartis uniformément sur la circonférence, qui sont logés dans un espace de réception (83) de la douille (43, 43', 43") à l'intérieur du cylindre de serrage (2, 2', 2", 112).

4. Dispositif de serrage (1) selon l'une des revendications 1 à 3, **caractérisé en ce que** le cylindre de serrage (2, 2', 2", 112) est vissé à la broche de machine (135) rotative et le module d'actionnement (3, 3", 3"') peut être vissé à une tête porte-broche fixe (85).

5. Dispositif de serrage (1) selon l'une des revendications 1 à 4, **caractérisé en ce que** la force de traction ou de pression sur le mandrin de serrage à force (6) peut être déterminée par l'intermédiaire du ressort intégré ou des ressorts (9, 9', 9", 49) intégrés dans le cylindre de serrage (2, 2', 2", 112).

6. Dispositif de serrage (1) selon l'une des revendications 1 à 5, **caractérisé en ce que** le module d'actionnement (3, 3", 3"') présente un piston de réglage (34, 34') mobile dont les surfaces de piston (39, 40, 92) peuvent être sollicitées avec une pression d'air ou d'huile à l'état couplé.

7. Dispositif de serrage (1) selon l'une des revendications 1 à 6, **caractérisé en ce qu'**après la modification de la tension de ressort dans le cylindre de serrage (2, 2', 2", 112), le module d'actionnement (3, 3", 3") peut être commuté sans pression et peut être découplé sans contact du cylindre de serrage (2, 2', 2", 112).

8. Dispositif de serrage (1) selon l'une des revendications 1 à 7, **caractérisé en ce que** le ressort ou les ressorts (9, 9', 9", 49) à l'intérieur du cylindre de serrage (2, 2', 2", 112) agissent par l'intermédiaire du tube de traction (18) sur le mandrin de serrage à force (6), dans lequel l'état de serrage d'une pièce à usiner (4) peut être bloqué élastiquement.

9. Dispositif de serrage (1) selon l'une des revendications 1 à 8, **caractérisé en ce que** le module d'actionnement (3, 3", 3") présente une ou deux surfaces de piston (39, 40, 92), dont la taille correspond à la force de ressort et de serrage maximale lorsqu'elles sont sollicitées par une pression.

10. Dispositif de serrage (1) selon l'une des revendications 1 à 9, **caractérisé en ce que** la pièce coulissante (10) est reliée par l'intermédiaire d'un filetage extérieur à un filetage intérieur du tube de piston (29, 29', 29").

11. Dispositif de serrage (1) selon l'une des revendications 1 à 10, **caractérisé en ce que** l'état ouvert du mandrin de serrage à force (6) peut être surveillé par un interrupteur de proximité BERO du dispositif de serrage (1).

12. Dispositif de serrage (1) selon l'une des revendications 1 à 11, **caractérisé en ce qu'**une course de ressort du ressort ou des ressorts (9, 9', 9", 49) peut être surveillée ou mesurée par un capteur de mesure de course (129) du dispositif de serrage (1).
